Europäisches Patentamt

European Patent Office

Office européen des brevets

(19)

(11) Numéro de publication: **0 302 391 B1**

## (12) FASCICULE DE BREVET EUROPEEN

(45) Date de publication de fascicule du brevet: **08.04.92**

(51) Int. Cl.5: **H02B 5/00**, H02B 5/06

(21) Numéro de dépôt: **88112229.5**

(22) Date de dépôt: **28.07.88**

(54) **Poste électrique.**

(30) Priorité: **03.08.87 FR 8710987**

(43) Date de publication de la demande:
**08.02.89 Bulletin 89/06**

(45) Mention de la délivrance du brevet:
**08.04.92 Bulletin 92/15**

(84) Etats contractants désignés:
**AT BE CH DE ES FR GB GR IT LI LU NL SE**

(56) Documents cités:
**EP-A- 0 129 216**
**DE-A- 2 646 617**
**FR-A- 2 448 799**

(73) Titulaire: **GEC ALSTHOM SA**
**38, avenue Kléber**
**F-75116 Paris(FR)**

(72) Inventeur: **Thuries, Edmond**
**34 rue de Versailles Pusignan**
**F-69330 Meyzieu(FR)**
Inventeur: **Masson, Jean-Paul**
**20 Impasse Chevreul**
**F-69100 Villeurbanne(FR)**

(74) Mandataire: **Weinmiller, Jürgen et al**
**Lennéstrasse 9 Postfach 24**
**W-8133 Feldafing(DE)**

## Description

La présente invention est relative à un poste électrique à haute tension.

On connaît deux types de postes électriques, les postes dits conventionnels et les postes blindés.

Les postes conventionnels comprennent des appareillages qui sont tous reliés entre eux par des liaisons dans l'air.

Ils présentent l'avantage de permettre une coupure visible des sectionneurs, de présenter des volumes de travail et des distances de sécurité importants facilitant les interventions du personnel.

Ils ont l'inconvénient de nécessiter une importante surface au sol, ce qui est un grave inconvénient aux alentours des villes, où le prix du terrain enchérit sans cesse.

Les postes blindés, dans lequels les liaisons sont effectués par des barres placées dans des tubes étanches isolés à l'héxafluorure de soufre, sont d'un encombrement beaucoup plus réduit.

Mais ils présentent plusieurs inconvénients : les distances entre les appareils ne permettant pas des interventions aisées.

Les sectionneurs blindés ne permettent pas d'avoir une représentation visuelle de leur état ouvert ou fermé, ce qui n'est pas favorable à la sécurité du personnel.

Un but de la présente invention est de réaliser un poste électrique à haute tension ayant une superficie réduite par rapport aux postes de type conventionnel tout en conservant ses qualités relatives à l'exploitation (coupure visible, distances de travail et de sécurité notables).

L'invention a pour objet un poste électrique destiné à coupler au moins une ligne aérienne électrique à des traversées de sortie d'au moins un jeu de barres triphasées, par l'intermédiaire notamment de sectionneurs et de disjoncteurs, caractérisé en ce que les disjoncteurs sont de type conventionnel, les sectionneurs sont de type télescopique et qu'au moins un jeu de barres est de type blindé, comprenant une gaine contenant un gaz diélectrique sous pression.

Selon une caractéristique de réalisation ladite ligne comporte des ancrages fixés de part et d'autre d'un portique unique central disposé au-dessus du jeu de barres blindées.

Selon une autre caractéristique les barres blindées sont reliées aux connecteurs femelles par des traversées isolantes étanches fixées aux gaines des barres blindées et en communication avec les gaines.

L'invention sera bien comprise par la description ci-après de divers mode de réalisation de l'invention en référence au dessin annexé dans lequel :

- la figure 1 est un schéma unifilaire d'un poste à deux lignes et deux jeux de barres ;
- la figure 2 et la figure 3 représentent schématiquement le même poste, respectivement en élévation et en vue de dessus.
- la figure 4 est un schéma unifilaire d'un poste à deux lignes et deux départs dit "à un disjoncteur et demi".
- les figures 5 et 6 représentent schématiquement le même poste, respectivement en élévation et en vue de dessus.
- la figure 7 est un schéma unifilaire d'un poste de couplage.
- les figures 8 et 9 représentent schématiquement le même poste, respectivement en élévation et en vue de dessus.
- le figure 10 est une vue schématique en couple axiale d'une traversée simple équipant les postes de l'invention.
- la figure 11 est une vue schématique d'une traversée double équipant les postes de l'invention.
- la figure 12 est vue en coupe selon la ligne XII-XII de la figure 11.

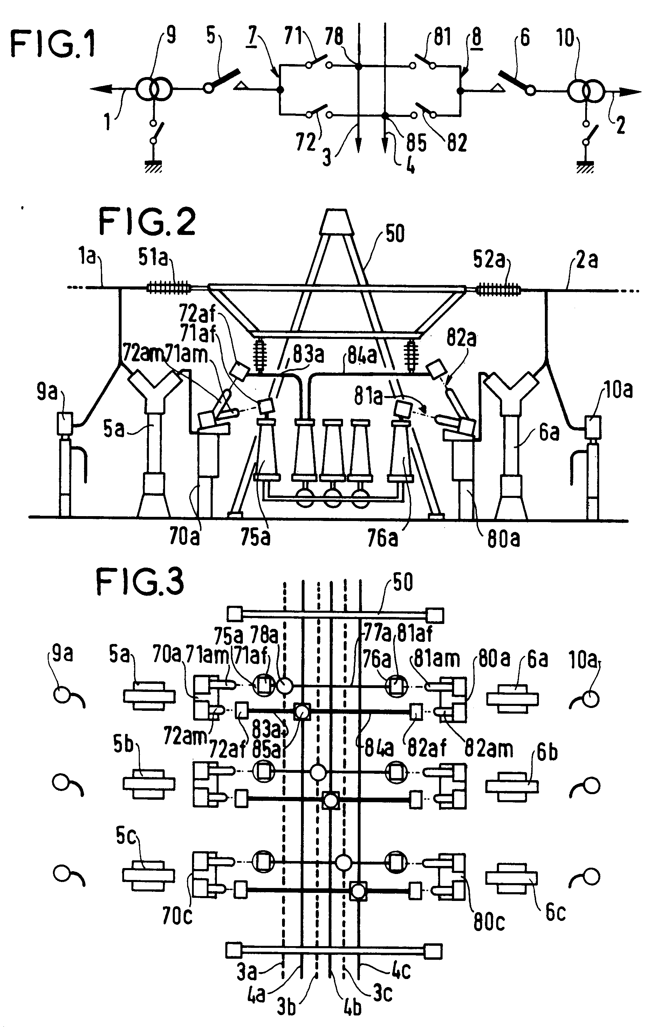

La figure 1 est le schéma unifilaire d'un poste à deux lignes 1 et 2 et alimenté par deux jeux de barres 3 et 4 par l'intermédiaire de disjoncteurs 5 et 6 et de sectionneurs 7 et 8.

Selon une particularité de l'invention les jeux de barres sont réalisés au moyen de barres sous gaine étanche remplie d'hexafluorure de soufre sous pression.

Ce type de barre est désigné dans la suite par les termes "barre blindée".

Les sectionneurs sont du type télescopique comprenant chacun deux connecteurs mâles (respectivement 71, 72 et 81, 82) placés sur un même support (voir figure 2)

Selon l'invention on utilise soit des traversées monophasées simple, soit les traversées monophasées doubles.

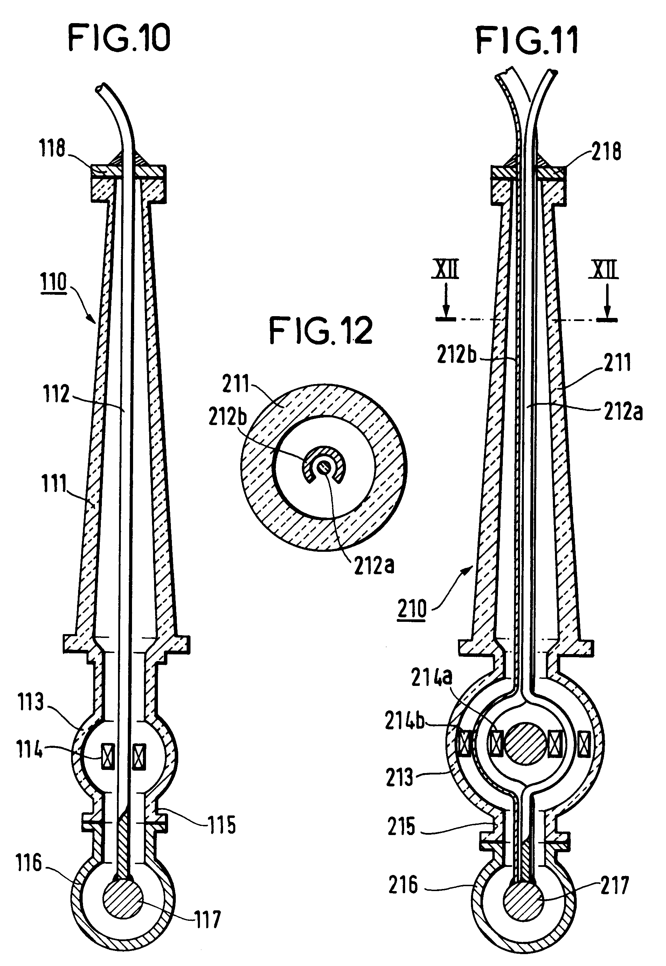

La traversée simple 110 (figure 10) comprend un support isolant conique en céramique 111, creux.

Le conducteur 112 traverse le cône selon son axe. Le cône est prolongé à sa partie inférieure par une partie renflée 113 assurant un logement pour un bobinge 114, constituant le secondaire d'un transformateur de courant dont le primaire est le conducteur 112.

La partie renflée est prolongée par une portion terminale cylindrique 115 fixée sur le blindage extérieur 116 d'une barre conductrice 117 avec isolement à l'héxafluorure de soufre.

Le conducteur 112 est connecté électriquement et fixé mécaniquement à la barre.

L'intérieur du cône est rempli de SF6 puisqu'il communique avec la barre blindée ; une pièce 118 assure la fermeture étanche du cône.

La traversée double 210 (figure 11) comprend un support conique isolant creux 211 prolongé par une portion renflée 213 et une partie cylindrique 215 reliée au blindage 216 d'une barre 217 à isolement au SF6.

Dans la partie conique sont placés deux conducteurs coaxiaux 212 a et 212 b, respectivement plein et tubulaire.

Le diamètre de la partie renflée 213 est suffisamment grand pour permettre le logment de deux enroulements 214a et 214b entourant respectivement les conducteurs 212a et 212b (qui alors se séparent) pour constituer avec ces derniers deux transformateurs de courant. Les deux conducteurs se réunissent coaxialement dans le plassage de la partie cylindrique 215 et sont fixés mécaniquement et connectés électriquement à la barre 217.

Une pièce 218 assure la fermeture étanche du cône, rempli de SF6 à la pression de la barre blindée 216-217.

On revient aux figures 2 et 3 qui sont des schémas triphasés dans lesquels les indices a, b, c désignent chacune des trois phases.

Les lignes 1 et 2 sont supportées par des isolateurs fixés à une portique unique 50 qui enjambe le poste. Seules les phases 1a et 2a sont visibles dans la figure 2, ainsi que les isolateurs 51a et 52a.

Les lignes sont reliées par des disjoncteurs de type classique (respectivement 5a, 5b, 5c et 6a, 6b, 6c) à des sectionneurs doubles 7 et 8 (71a, 71b, 71c ; 72a, 72b, 72c ; 81a, 81b, 81c ; 82a, 82b, 82c).

Les parties mâles 71am (71bm, 71cm), 72am (72bm, 72cm) due sectionneur sont portées par des colonnes support 70a, (70b, 70c).

De même les parties mâles 81am (81bm, 81cm), 82am (82bm, 82cm) du sectionneur 8 sont portées par des colonnes support 80a (80b, 80c).

Les parties femelles 72af, 72bf, 72cf du sectionneur 72a, (72b, 72c) ainsi que les parties 82af, 82bf, 82cf du sectionneur 82a (82b, 82c) sont fixées au portique 50.

Les parties femelles 71af, 71bf, 71cf sont fixées respectivement à la partie supérieure de traversées isolantes simples (du type de la figure 10) 75a, 75b, 75c.

De même, les parties femelles 81af, 81bf, 81cf sont fixées respectivement à la partie supérieure de traversées isolantes simples 76a, 76b, 76c.

Un tronçon de barre blindée 77a (77b, 77c) relie entre elles les traverséees ; ces tronçons sont connectés électriquement respectivement à des barres blindées 3a, 3b, 3c constituant le premier départ. Les points de connection des barres blindées deux à deux sont référencés 78a, 78b, 78c.

Les connecteurs femelles 72af, 82af, (72bf, 82bf ; 72cf, 82cf) fixés au portique sont électriquement reliés aux barres blindées 4a (4b ; 4c) constituant le second départ, par des conducteurs aériens 83a (83b, 83c) et 84a (84b, 84c) pénétrant dans des traversées doubles (type de la figure 11) 85a, (85b, 85c).

Les références 9a, 9b, 9c, et 10a, 10b et 10c désignent des transformateurs de potentiel avec mise à la terre destinés aux mesures et à la signalisation.

Grâce à la combinaison précédente d'appareillages de type classique (disjoncteurs), de sectionneurs télescopiques doubles, de traversées simples et doubles et de barre blindées, on a réussi à constituer un poste hydride plus compact que ceux de l'art antérieur et qui néanmoins ménage suffisamment de place pour assurer une maintenance facile et sans danger et qui permet de conserver des coupures visibles.

Par rapport à un poste conventionnel les réductions des dimensions sont voisines de 15 % sur la longueur et de 50 % sur la largeur ; ceci correspond à un gain voisin de 60 % en superficie.

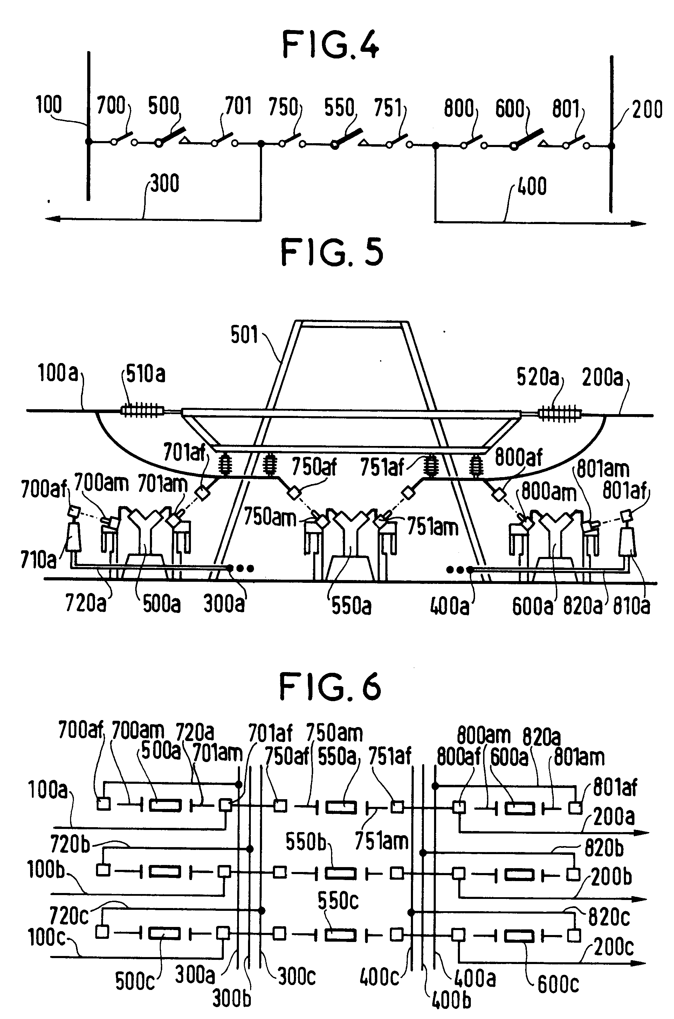

La figure 4 est un schéma de poste dit à un "disjoncteur et demi" avec deux jeux de barres 100 et 200, deux départs 300 et 400 et trois disjoncteurs 500, 550 et 600, encadrés chacun par deux sectionneurs, respectivement 700, 701 ; 750, 751 ; 800, 801.

Le poste comprend un portique unique 501 auquel sont fixés par des isolateurs 510a (510b, 510c) les fils 100a (100b, 100c) de la ligne 100 et par des isolateur 520a (520b, 520c) les fils 200a (200b, 200c) de la ligne 200.

Les sectionneurs sont télescopiques, avec un seul contact mâle par support.

Le support 710a de la phase a du sectionneur 700, supportant le contact femelle 700af est une traversée isolante simple (du type de la figure 10) reliée par une barre blindée à une barre blindée 300a constituant la phase a du départ 300.

Les connecteurs femelles 701af, (701bf, 701cf), 750af (750bf, 750cf), 751af (751bf, 751cf) et 800af (800bf, 800cf) des sectionneurs 701, 750, 751 et 800 sont fixés au portique 501.

Les conducteurs mâles correspondant 701am (701bm, 701cm), 750am (750bm, 750cm), 800am (800bm, 800cm) et 801am (801bm, 801cm) sont fixés sur de simples supports isolants et reliées comme il convient aux divers pôles des disjoncteurs 500a, (500b, 500c), 550a (550b, 550c) et 600a (600b, 600c).

Les connecteurs femelles 801af (801bf, 801cf) du sectionneur 800 sont placés sur des traversées simples (type figure 10) 810a (810b, 810c) reliées par des tronçons de barres blindées 820a (820b, 820c) aux barres blindées 400a (400b, 400c) constituant le second jeux de barres.

Là encore, la constitution hybride du poste permet d'obtenir les résultats annoncés au début du présent mémoire.

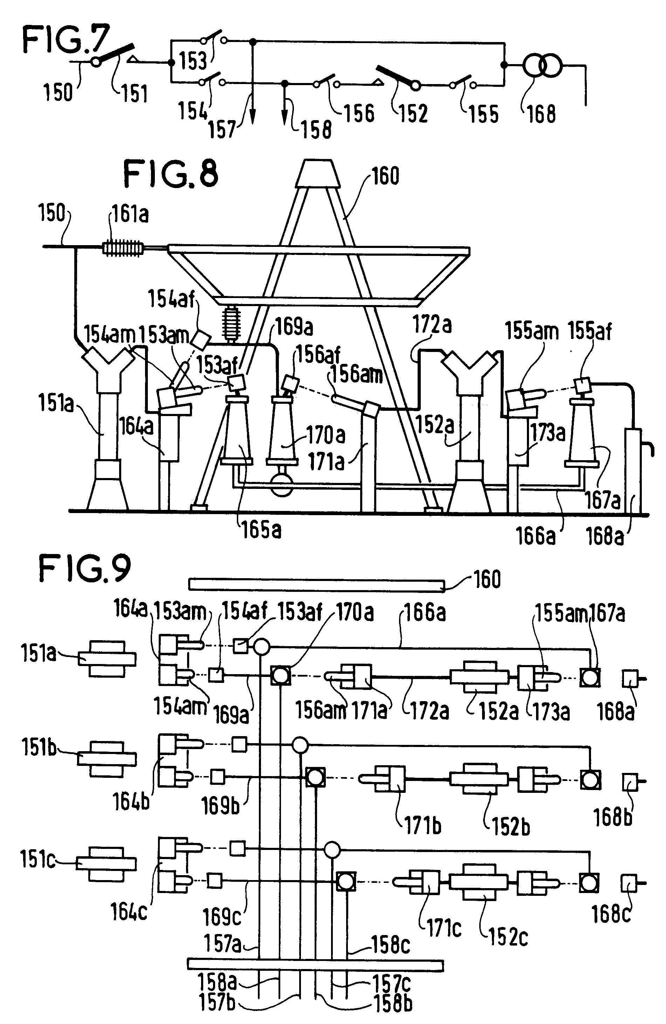

L'invention s'applique également à un poste de couplage comprenant (figure 7) un ligne 150, deux disjoncteurs 151 et 152, quatre sectionneurs 153, 154, 155 et 156 et deux départs 157 et 158.

Un portique unique 160, avec isolateur 161 a (161b, 161c) portant les conducteurs de ligne 150a (150b, 150c), maintient également les connecteurs femelles 154af (154bf, 154cf) du sectionneur 154.

Le support 164a (164b, 164c) du connecteur mâle 154am (154bm, 154cm) de ce sectionneur 154 est également celui du connecteur mâle 153am (153bm, 153cm) du sectionneur 153.

Les connecteurs mâles précités sont reliés aux pôles du disjoncteur 151a (151b, 151c) eux-mêmes reliés par des conducteurs aériens à la ligne.

Les connnecteurs femelles 153af, (153bf, 153cf) sont portées par des traversées isolantes simples (du types de la figure 10) 165a (165b, 165C) qui sont reliées d'une part aux barres blindées 157a (157b, 157c) constituant le premier départ et d'autre part par des tronçons de barres blindées 166a (166b, 166c) à des traversées isolantes doubles 167a (167b, 167c) portant les connecteurs femelles 155af (155bf, 155cf) du sectionneur 155 et reliées à des transformateurs de potentiel 168a (168b, 168c).

Les connecteurs femelles 154af (154bf, 154cf) du sectionneur, portés par le portique sont reliés par des conducteurs aériens 169a (169b, 169c) à des traversées double (type de la figure 11) 170a (170b, 170c).

Ces traversées portent les connecteurs femelles 156af (156bf, 156cf) du sectionneur 156 et sont reliées électriquement aux barres blindées 158a (158b, 158c) constituant le second départ.

Les conducteurs mâles 158a (158b, 158c) du sectionneur télescopique 158 sont portés par de simples supports isolants 171aa (171b, 171c).

Les conducteurs sont reliés par des ocnducteurs aériens 172a (172b, 172c) aux pôles 152a (152b, 152c) du disjoncteur 152.

Ces pôles sont également reliés par des conducteurs aux connecteurs mâles 155am (155bm, 155cm) du sectionneur 155, portés par de simples supports isolants 173a (173b, 173c).

Là encore l'utilisation de connexion en barres blindées et de sectionneurs télescopiques permet de réaliser un poste hybride ayant les qualités recherchées.

## Revendications

1. Poste électrique destiné à coupler au moins une ligne aérienne électrique à des traversées de sortie d'au moins un jeu de barres triphasées, par l'intermédiaire notamment de sectionneurs et de disjoncteurs, caractérisé en ce que les disjoncteurs (5, 6) sont de type conventionnel, les sectionneurs (71, 72, 81, 82) sont de type télescopique et qu'au moins un jeu de barres (3, 4) est de type blindé, comprenant une gaine contenant un gaz diélectrique sous pression.

2. Poste électrique selon la revendication 1 caractérisé en ce que ladite ligne (1a, 2a) comporte des ancrages fixés de part et d'autre d'un portique unique (50) central disposé au-dessus du jeu de barres blindées.

3. Poste électrique selon l'une des revendications 1 et 2 caractérisé en ce que les barres blindées (3a, 3b, 3c, 4a, 4b, 4c) sont reliées aux connecteurs femelles (71af, 71bf, 71cf, 72af, 72bf, 72cf) par des traversées isolantes étanches fixées aux gaines des barres blindées et en communication avec les gaines.

4. Poste électrique selon la revendication 3 caractérisé en ce que ladite traversée (110) sert de support à un connecteur femelle d'un sectionneur et comporte un conducteur axial (112) relié électriquement à la barre blindée.

5. Poste électrique selon la revendication 4 caractérisé en ce que la traversée isolante (210) comprend un second conducteur (211b) coaxial au premier (212a) et relié à la barre blindée.

6. Poste selon l'une des revendication 4 et 5 caractérisé en ce que la traversée (110, 210) possède un renflement (113, 213) permettant le logement de bobinage (114, 214a, 14b) entourant les conducteurs axiaux (112, 212a, 212b) et constituant avec eux des transformateurs de courant.

## Claims

1. An electricity station for coupling at least one air-insulated electric line to output feedthroughs from at least one set of three-phase busbars via, in particular, section switches and circuit breakers, the station being characterized in that the circuit brewers (5, 6) are of conventional type, the section switches (71, 72, 81, 82) are of telescopic type, and at least one set of busbars (3, 4) is of the metal-clad type including a sheath containing dielectric gas under pressure.

2. An electricity station according to claim 1, characterized in that said line (1a, 2a) includes anchor points fixed on either side of a single central gantry (50) disposed over the set of metal-clad bars.

3. An electricity station according to claim 1 or 2, characterized in that the metal-clad bars (3a, 3b, 3c, 4a 4b, 4c) are connected to female connectors (71af, 71bf, 71cf, 72af, 72bf, 72cf) via gas-tight insulating feedthroughs fixed to the sheaths of the metal-clad bars and in communication with the sheaths.

4. An electricity station according to claim 3, characterized in that said feedthrough (110) serves as a support for a female connector of a section switch and includes an axial conductor (112) which is electrically connected to the metal-clad bar.

5. An electricity station according to claim 4, characterized in that the insulating feedthrough (210) includes a second conductor (211b) coaxial with the first conductor (212a) and connected to the metal-clad bar.

6. A station according to claim 4 or 5, characterized in that the feedthrough (110, 210) includes a bulbous portion (113, 213) suitable for receiving a winding (114, 214a, 214b) surrounding the axial conductors (112, 212a, 212b) and constituting current transformers therewith.

**Patentansprüche**

1. Elektrische Station zum Anschließen mindestens einer elektrischen Freileitung an Ausgangsdurchführungen mindestens eines dreiphasigen Schienensatzes mit Hilfe insbesondere von Trennschaltern und Lastschaltern, dadurch gekennzeichnet, daß die Lastschalter (5, 6) vom konventionellen Typ sind, die Trennschalter (71, 72, 81, 82) vom Teleskoptyp sind und daß mindestens ein Schienensatz (3, 4) vom gekapselten Typ ist, der eine mit einem unter Druck stehenden dielektrischen Gas gefüllte Hülle aufweist.

2. Elektrische Station nach Anspruch 1, dadurch gekennzeichnet, daß die Leitung (1a, 2a) Verankerungen aufweist, die zu beiden Seiten eines einzigen zentralen Masts (50) befestigt sind, der über dem Satz gekapselter Schienen angeordnet ist.

3. Elektrische Station nach Anspruch 1 oder 2, dadurch gekennzeichnet, daß die gekapselten Schienen (3a, 3b, 3c, 4a, 4b, 4c) mit gabelförmigen Kontaktteilen (71af, 71bf, 71cf, 72af, 72bf, 72cf) über dichte isolierende Durchführungen verbunden sind, die an den Hüllen der gekapselten Schienen befestigt sind und mit den Hüllen in Verbindung stehen.

4. Elektrische Station nach Anspruch 3, dadurch gekennzeichnet, daß die Hülle (110) als Stütze für ein gabelförmiges Kontaktteil eines Trennschalters dient und einen axialen Leiter (112) aufweist, der elektrisch an die gekapselte Schiene angeschlossen ist.

5. Elektrische Station nach Anspruch 4, dadurch gekennzeichnet, daß die isolierte Durchführung (210) einen zweiten Leiter (211b) aufweist, der koaxial zum ersten Leiter (212a) liegt und mit der gekapselten Schiene verbunden ist.

6. Station nach Anspruch 4 oder 5, dadurch gekennzeichnet, daß die Durchführung (110, 210) eine Ausbauchung (113, 213) aufweist, welche die Unterbringung der Wicklung (114, 214a, 214b) ermöglicht, welche die axialen Leiter (112, 212a, 212b) umgibt und mit diesen Stromtransformatoren bildet.

EP 0 302 391 B1

FIG.1

FIG.2

FIG.3

# FIG.4

# FIG. 5

# FIG.6

**FIG.7**

150  151  153  154  157  158  156  152  155  168

**FIG.8**

150  161a  160  154af  154am 153am  169a  156af  156am  172a  155am 155af  153af  151a  164a  170a 171a  152a  173a  165a  166a  168a  167a

**FIG.9**

160  164a 153am  154af  153af  170a  166a  155am 167a  151a  154am 169a  156am 171a  172a  152a  173a  168a  151b  164b  169b  171b  152b  168b  151c  164c  169c  171c  152c  168c  157a  158c  158a  157c  157b  158b

# FIG.10

110

112

111

113

114

115

116

117

118

# FIG.12

211
212b

212a

# FIG.11

218

212b

211

212a

210

214a

214b

213

215

216

217